# EUROPEAN PATENT APPLICATION

(11) **EP 3 845 364 A1**
(43) Date of publication of application: **07.07.2021**
(21) Application number: 19854661.6
(22) Date of filing: 19.08.2019
(51) Int. Cl.: B29C 64/124, B29C 64/20, B29C 64/245, B29C 64/393, B33Y 10/00, B33Y 30/00

(54) **SLICE MANUFACTURING APPARATUS, 3D PRINTING DEVICE AND METHOD, AND 3D PRINTING MODEL**

(30) Priority: 31.08.2018 CN 201811012543
(71) Applicant: BOE TECHNOLOGY GROUP CO., LTD., Beijing 100015 (CN); Beijing Boe Special Display Technology Co., Ltd., Beijing 100015 (CN)
(72) Inventor: ZHU, Huizhong, Beijing 100176 (CN); ZHOU, Xin, Beijing 100176 (CN)
(74) Representative: Klunker IP Patentanwälte PartG mbB
(86) International application number: PCT/CN2019/101377
(87) International publication number: WO 2020/042953

(57) **Abstract**

Provided are a 3D printing model slice manufacturing apparatus, a 3D printing device and method, and a 3D printing model. The 3D printing model slice manufacturing apparatus comprises: a driving means (10) comprising a plurality of driving units (11), the driving units (11) being configured to form an electric field, the driving means (10) being configured to drive a liquid 3D printing material located on a surface thereof to flow under the control of the electric field so as to form a pattern to be printed; and a curing assembly (20) provided opposite to the driving means (10) and configured to provide light that cures said pattern into a slice. This 3D printing model slice manufacturing apparatus can help to improve accuracy of 3D printing.

## Description

### CROSS-REFERENCE TO RELATED APPLICATIONS

The present application claims priority to the Chinese patent application No. 201811012543.X filed on August 31, 2018, the entire disclosure of which is incorporated herein by reference as part of the present application.

### TECHNICAL FIELD

At least one embodiment of the present disclosure relates to a device for manufacturing a slice of a 3D printed model, a 3D printing apparatus and method, and a 3D printed model.

### BACKGROUND

A conventional 3D printing technology has problems of low accuracy and low efficiency.

With respect to accuracy, due to a "step effect" of layer-by-layer fabrication, there are steps present between adjacent layers for each layer from a microscopic view, which will cause deviation in accuracy if a surface of an object to be printed is arc-shaped.

With respect to efficiency, a single 3D printing apparatus at present can only print one model at a time, which has low efficiency and no advantage in large-scale production.

### SUMMARY

At least one embodiment of the present disclosure relates to a device for manufacturing a slice of a 3D printed model, a 3D printing apparatus and method, and a 3D printed model.

At least one embodiment of the present disclosure provides a device for manufacturing a slice of a 3D printed model, which includes: a driving component, including a plurality of driving units, each of the plurality of driving units being configured to form an electric field, the driving component being configured to drive a liquid 3D printing material located on a surface of the driving component to flow under control of the electric field to form a pattern to be printed; and a curing component, provided opposite to the driving component, and configured to provide light that cures the pattern to be printed into a slice.

For example, in the device for manufacturing a slice of a 3D printed model provided by one or more embodiments of the present disclosure, the driving unit includes a first electrode and a second electrode that are insulated from each other, and the first electrode and the second electrode are configured to be applied with different voltages to form the electric field.

For example, in the device for manufacturing a slice of a 3D printed model provided by one or more embodiments of the present disclosure, the driving component further includes a base substrate, the first electrode and the second electrode are located on the base substrate, the driving component further includes a protective layer covering both the first electrode and the second electrode, and the protective layer includes a groove located at a periphery of the driving component and configured to receive a liquid material that does not need to be printed and flows out of the driving component.

For example, in the device for manufacturing a slice of a 3D printed model provided by one or more embodiments of the present disclosure, the protective layer includes a first via hole, the first via hole penetrates the protective layer in a direction parallel with the base substrate and is located outside the groove, and the first via hole is in communication with the groove.

For example, in the device for manufacturing a slice of a 3D printed model provided by one or more embodiments of the present disclosure, a barrier is provided at a side of the driving component that is close to the curing component, a second via hole is provided at a side of the barrier that is close to the driving component, and the second via hole is configured such that the liquid material that does not need to be printed flows out of a space surrounded by the barrier.

For example, in the device for manufacturing a slice of a 3D printed model provided by one or more embodiments of the present disclosure, the driving component further includes a plurality of gate lines and a plurality of data lines, the plurality of gate lines and the plurality of data lines are insulated from each other and are intersect with each other to define the plurality of driving units, and the driving unit includes a thin film transistor electrically connected with the second electrode.

At least one embodiment of the present disclosure further provides a 3D printing apparatus, which includes any one of the devices for manufacturing a slice of the 3D printed model as described above.

For example, the 3D printing apparatus further includes: a slice stacking component configured to stack a plurality of slices; and a slice combining component configured to combine a plurality of slices that are stacked into the 3D printed model.

For example, the 3D printing apparatus further includes: an alignment mark forming element, the alignment mark forming element is configured to form an alignment mark on the slice.

For example, in the 3D printing apparatus provided by one or more embodiments of the present disclosure, the slice stacking component includes a robot arm, a platform and an alignment element, the platform is configured to support the slice, the robot arm is configured to move the slice from the driving component onto the platform, and the alignment element is configured to align adjacent slices with each other.

For example, in the 3D printing apparatus provided by one or more embodiments of the present disclosure, the slice combining component includes at least one selected from the group consisting of a light irradiating unit and an adhesive coating unit.

For example, in the 3D printing apparatus provided by one or more embodiments of the present disclosure, the light irradiating unit is configured to provide light that is irradiated onto the plurality of slices to melt the plurality of slices.

At least one embodiment of the present disclosure further provides a 3D printing method, which includes: providing a layer of a liquid 3D printing material on a driving component; adjusting an electric field of at least a part of a plurality of driving units in the driving component so that at least a portion of the 3D printing material flows to form a pattern to be printed; light-curing the pattern to be printed to form a slice; forming a plurality of slices by repeating the above-described steps; stacking the plurality of slices; and combining the plurality of slices that are stacked to obtain a 3D printed model.

For example, the 3D printing method further includes forming at least two alignment marks at a side surface of the slice, the at least two alignment marks are configured such that two adjacent stacked slices are aligned with each other in two directions perpendicular to each other in a plane parallel with the slice.

For example, the 3D printing method further includes moving each slice away from the driving component after forming the slice and before forming a next slice on the driving component.

For example, in the 3D printing method provided by one or more embodiments of the present disclosure, adjusting the electric field of at least a part of the plurality of driving units in the driving component so that at least a portion of the 3D printing material flows to form a pattern to be printed includes: adjusting the electric field of the driving unit corresponding to both a blank position and a periphery of the pattern to be printed so that at least a portion of the 3D printing material flows to form the pattern to be printed by using an entirety of the 3D printing material.

For example, in the 3D printing method provided by one or more embodiments of the present disclosure, adjusting the electric field of at least a part of the plurality of driving units in the driving component so that at least a portion of the 3D printing material flows to form a pattern to be printed includes: adjusting the electric field of the driving unit corresponding to both a blank position and a periphery of the pattern to be printed so that at least a portion of the 3D printing material flows to form the pattern to be printed by using a part of the 3D printing material.

For example, the 3D printing method further includes separating a remaining 3D printing material that does not form the pattern to be printed from the pattern to be printed.

At least one embodiment of the present disclosure further provides a 3D printed model formed by using any one of the methods as described above.

### BRIEF DESCRIPTION OF THE DRAWINGS

In order to clearly illustrate the technical solution of the embodiments of the present disclosure, the drawings of the embodiments will be briefly described in the following; it is obvious that the described drawings are only related to some embodiments of the present disclosure and thus are not limitative of the present disclosure.
FIG. 1A is a device for manufacturing a slice of a 3D printed model provided by an embodiment of the present disclosure;
FIG. 1B is a schematic plan view illustrating a layer of a liquid 3D printing material provided on a driving component in a device for manufacturing a slice of a 3D printed model provided by an embodiment of the present disclosure;
FIG. 1C is a schematic plan view illustrating a driving unit in a driving component in a device for manufacturing a slice of a 3D printed model provided by an embodiment of the present disclosure;
FIG. 1D is a schematic plan view illustrating a pattern to be printed on a driving component in a device for manufacturing a slice of a 3D printed model provided by an embodiment of the present disclosure;
FIG. 1E is a schematic diagram illustrating a curing component that cures a pattern to be printed into a slice in a device for manufacturing a slice of a 3D printed model provided by an embodiment of the present disclosure;
FIG. 2A is a cross-sectional view illustrating a device for manufacturing a slice of a 3D printed model provided by an embodiment of the present disclosure;
FIG. 2B is a cross-sectional view illustrating a device for manufacturing a slice of a 3D printed model provided by an embodiment of the present disclosure;
FIG. 2C is a schematic diagram, from another viewing angle, illustrating a device for manufacturing a slice of a 3D printed model provided by an embodiment of the present disclosure;
FIG. 2D is a plan view illustrating a driving component in a device for manufacturing a slice of a 3D printed model provided by an embodiment of the present disclosure;
FIG. 2E is a plan view illustrating a driving unit that forms an electric field in a driving component in a device for manufacturing a slice of a 3D printed model provided by an embodiment of the present disclosure;
FIG. 2F is a plan view illustrating a driving unit that forms an electric field in a driving component in a device for manufacturing a slice of a 3D printed model provided by an embodiment of the present disclosure;
FIG. 3A is a cross-sectional view illustrating a device for manufacturing a slice of a 3D printed model provided by an embodiment of the present disclosure;
FIG. 3B is a cross-sectional view illustrating a device for manufacturing a slice of a 3D printed model provided by an embodiment of the present disclosure;
FIG. 3C is a schematic diagram, from another viewing angle, illustrating a device for manufacturing a slice of a 3D printed model provided by an embodiment of the present disclosure;
FIG. 3D is a schematic plan view illustrating a device for manufacturing a slice of a 3D printed model provided by an embodiment of the present disclosure;
FIG. 3E is a schematic plan view illustrating a device for manufacturing a slice of a 3D printed model provided by an embodiment of the present disclosure;
FIG. 4 is a schematic diagram illustrating simultaneously forming a plurality of patterns to be printed on a driving component of a device for manufacturing a slice of a 3D printed model provided by an embodiment of the present disclosure;
FIG. 5 is a schematic diagram illustrating a 3D printing apparatus provided by an embodiment of the present disclosure;
FIG. 6A is a schematic diagram illustrating an alignment mark forming element in a 3D printing apparatus provided by an embodiment of the present disclosure;
FIG. 6B is a schematic diagram illustrating stacking adjacent slices by a 3D printing apparatus provided by an embodiment of the present disclosure; and
FIG. 7 is a schematic perspective view illustrating a 3D printed model provided by an embodiment of the present disclosure.

### DETAILED DESCRIPTION

In order to make objectives, technical details and advantages of the embodiments of the present disclosure apparent, the technical solutions of the embodiments will be described in a clearly and fully understandable way in connection with the drawings related to the embodiments of the present disclosure. Apparently, the described embodiments are just a part but not all of the embodiments of the present disclosure. Based on the described embodiments herein, those skilled in the art can obtain other embodiment(s), without any inventive work, which should be within the scope of the present disclosure.

Unless otherwise defined, all the technical and scientific terms used herein have the same meanings as commonly understood by one of ordinary skill in the art to which the present disclosure belongs. The terms "first," "second," etc., which are used in the present disclosure, are not intended to indicate any sequence, amount or importance, but distinguish various components. Also, the terms "comprise," "comprising," "include," "including," etc., are intended to specify that the elements or the objects stated before these terms encompass the elements or the objects and equivalents thereof listed after these terms, but do not preclude the other elements or objects. The phrases "connect", "connected", etc., are not intended to define a physical connection or mechanical connection, but may include an electrical connection, directly or indirectly. "On," "under," "right," "left" and the like are only used to indicate relative position relationship, and when the position of the described object is changed, the relative position relationship may be changed accordingly.

Microfluidics is currently applied to many fields, particularly in the fields of chemistry and medicine, and has unparalleled advantages for various chemical experiments. Microfluidics may control operations such as moving, mixing and splitting, and reacting of a liquid.

A microfluidic technology based on electrowetting on a dielectric refers to a technology of changing a contact angle of a droplet on an insulating dielectric on a chip containing the dielectric by applying a voltage signal, causing the droplet to deform asymmetrically, thereby generating an internal force to manipulate the droplet. The technology is receiving more and more attention due to its advantages such as simple implementation, convenient operation, good controllability, and high driving ability, and is considered to be a most promising technology in the field of microfluidics.

A principle that a liquid may be moved, mixed and split under an action of an electric field are mainly used in the embodiments of the present disclosure.

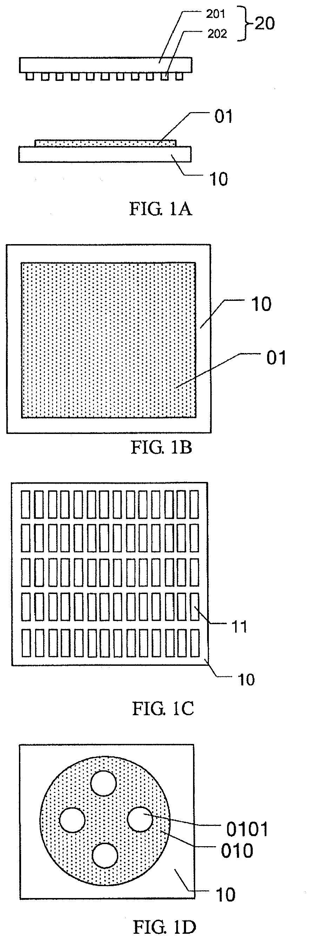

FIG. 1A is a device for manufacturing a slice of a 3D printed model provided by an embodiment of the present disclosure. The device includes: a driving component 10 and a curing component 20. A layer of a liquid 3D printing material 01 may be placed on a surface of the driving component 10. The curing component 20 is provided opposite to the driving component 10. For example, the liquid 3D printing material 01 includes a resin and a light-curing agent, and may further include a solvent, etc. The liquid 3D printing material 01 is not limited thereto.

FIG. 1B is a schematic plan view illustrating a layer of a liquid 3D printing material provided on a driving component in a device for manufacturing a slice of a 3D printed model provided by an embodiment of the present disclosure. For example, after the liquid 3D printing material is provided on the driving component, it may be flattened with a flat plate.

FIG. 1C is a schematic plan view illustrating a driving unit in a driving component in a device for manufacturing a slice of a 3D printed model provided by an embodiment of the present disclosure. As illustrated in FIG. 1C, the driving component 10 includes a plurality of driving units 11, the plurality of driving units 11 are configured to form an electric field, for example, each of the plurality of driving units 11 is configured to form an electric field. As illustrated in FIG. 1C, the plurality of driving units 11 are arranged in an array. An arrangement mode of the plurality of driving units 11 is not limited to that illustrated in FIG. 1C. By adjusting an electric field of a relevant driving unit 11, operations of moving, mixing and splitting of a liquid may be implemented. For example, by adjusting the electric field of a relevant driving unit 11, the liquid is separated into a plurality of liquid droplets, or a plurality of liquid droplets are mixed together. For example, adjusting the electric field of the driving unit 11 includes adjusting the driving unit 11 to form an electric field, or not to form any electric field, or adjusting a magnitude of the electric field. The plurality of driving units 11 may cooperate to cause the liquid 3D printing material to flow.

FIG. 1D is a schematic plan view illustrating a pattern to be printed on a driving component in a device for manufacturing a slice of a 3D printed model provided by an embodiment of the present disclosure. As illustrated in FIG. 1D, the driving component 10 is configured to drive the liquid 3D printing material 01 on a surface of the driving component 10 to flow under control of an electric field to form a pattern 010 to be printed. The pattern 010 to be printed may include a blank region (in a blank position) 0101 surrounded by the liquid 3D printing material 01. The pattern 010 to be printed is schematically described in FIG. 1D, without limited to that illustrated in FIG. 1D, and may be provided as needed. The liquid 3D printing material 01 is not provided in the blank region (blank position) 0101.

For example, for fabrication of the driving unit 11, a fabrication method of a common electrode and a pixel electrode that control rotation of liquid crystal molecules in a pixel unit in a liquid crystal display field may be referred to; and the driving unit 11 may be fabricated as small as a dozen microns, so that the driving component has a higher accuracy, which is favorable for manufacturing a slice with a curved surface.

In the embodiment of the present disclosure, flow of the liquid may be controlled by the electric field to further obtain a desired pattern to be printed; and because the driving unit 11 may have a higher accuracy, accuracy of 3D printing may be improved.

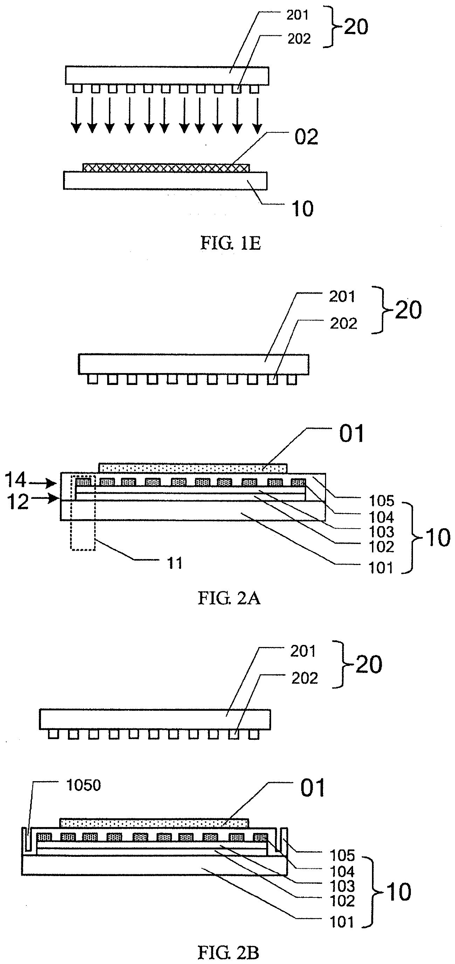

FIG. 1E is a schematic diagram illustrating a curing component configured to cure a pattern to be printed into a slice in a device for manufacturing a slice of a 3D printed model provided by an embodiment of the present disclosure. As illustrated in FIG. 1E, the curing component 20 is configured to provide light that cures the pattern 010 to be printed (as illustrated in FIG. ID) into a slice 02. As illustrated in FIG. 1E, the curing component 20 includes a substrate 201 and a plurality of light sources 202 located at a side of the substrate 201 that is close to the driving component 10. For example, the substrate 201 includes a printed circuit board, without limited thereto. For example, the light source 202 may emit ultraviolet light, without limited thereto. For example, a wavelength of light emitted from the light source 202 may be 365 nm, without limited thereto. The light source 202 may provide energy onto the pattern 010 to be printed so as to cure the pattern 010 to be printed.

FIG. 2A is a cross-sectional view illustrating a device for manufacturing a slice of a 3D printed model provided by an embodiment of the present disclosure. As illustrated in FIG. 2A, the driving component 10 includes a base substrate 101 and a plurality of driving units 11 located on the base substrate 101. For example, the driving unit 11 includes a first electrode 102 and a second electrode 104 insulated from each other; and the first electrode 102 and the second electrode 104 are configured to be applied with different voltages to form an electric field. As illustrated in FIG. 2A, a plurality of first electrodes 102 constitute a first electrode layer 12; the first electrodes 102 of the first electrode layer 12 are plate-shaped, that is, first electrodes 102 of different driving units 11 may be electrically connected with each other, and applied with a common signal. As illustrated in FIG. 2A, a second electrode layer 14 includes a plurality of second electrodes 104 insulated from each other, and the plurality of second electrodes 104 are configured to be separately applied with signals. Second electrodes 104 of different driving units 11 are insulated from each other to facilitate separately control of the driving units 11. As illustrated in FIG. 2A, an insulation layer 103 may be provided between the first electrode layer 12 and the second electrode layer 14.

The electric field generated by the first electrode 102 and the second electrode 104 in the driving unit 11 may act on the liquid 3D printing material on the driving component 10, which may change a position of the 3D printing material, so as to form the pattern to be printed.

As illustrated in FIG. 2A, in some embodiments, the driving component 10 further includes a protective layer 105 covering both the first electrode 102 and the second electrode 104. For example, the position of the liquid 3D printing material may be changed by adjusting voltages of the second electrode 104 in the respective driving units 11 to form the pattern to be printed. For example, a reference voltage may be input to the second electrode 104, and the reference voltage is, for example, a constant voltage.

FIG. 2B is a cross-sectional view illustrating a device for manufacturing a slice of a 3D printed model provided by an embodiment of the present disclosure. As illustrated in FIG. 2B, in some embodiments, the protective layer 105 includes a groove 1050 located at a periphery of the driving component 10, and the groove 1050 is configured to receive a liquid material that does not need to be printed and flows out of the driving component 10, so as to facilitate recycle and reuse of the material. For example, in a plan view of the groove 1050, the groove 1050 may be in an annular shape, including, for example, a circular ring or a rectangular ring. The groove 1050 is located outside both the first electrode 102 and the second electrode 104. For example, an orthographic projection of both the first electrode 102 and the second electrode 104 on the base substrate 101 falls within an orthographic projection of a region surrounded by the groove 1050 on the base substrate 101.

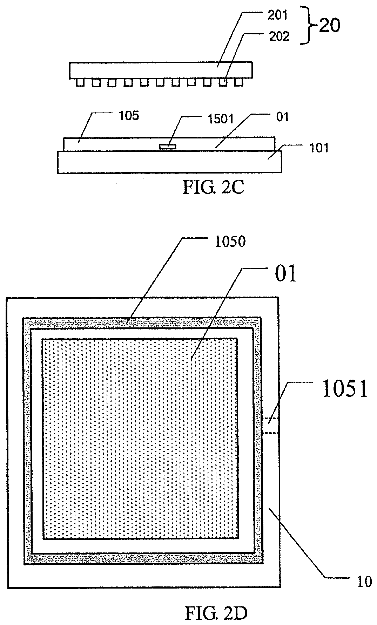

FIG. 2C is a schematic diagram, from another viewing angle, illustrating a device for manufacturing a slice of a 3D printed model provided by an embodiment of the present disclosure. As illustrated in FIG. 2C, for example, the device for manufacturing a slice of the 3D printed model may further include a first via hole 1051 to facilitate material recycling. The first via hole 1051 penetrates the protective layer 105 in a direction parallel with the base substrate 101 and is located outside the groove 1050. That is, the protective layer 105 includes the first via hole 1051 penetrating a portion of the protective layer 105 that is located outside the groove 1050 in the direction parallel with the base substrate 101. For example, the first via hole 1051 is in communication with the groove 1050. For example, the direction parallel with the base substrate 101 includes a horizontal direction, without limited thereto.

FIG. 2D is a plan view illustrating a driving component in a device for manufacturing a slice of a 3D printed model provided by an embodiment of the present disclosure. As illustrated in FIG. 2D, the groove 1050 is provided around the periphery of the driving component 10. As illustrated in FIG. 2D, in order to facilitate outflow of the liquid material not to be printed, the first via hole 1051 penetrating the protective layer 105 in the direction parallel with the base substrate 101 and in communication with the groove 1050 may be further provided in a position of the protective layer 105 that is located outside the groove 1050.

For example, a material of the insulation layer includes at least one selected from the group consisting of silicon oxide, silicon nitride and silicon oxynitride. For example, the protective layer 105 is made of an insulation material. For example, the material of the protective layer 105 includes a resin. However, the materials of the insulation layer and the protective layer 105 are not limited to those listed above.

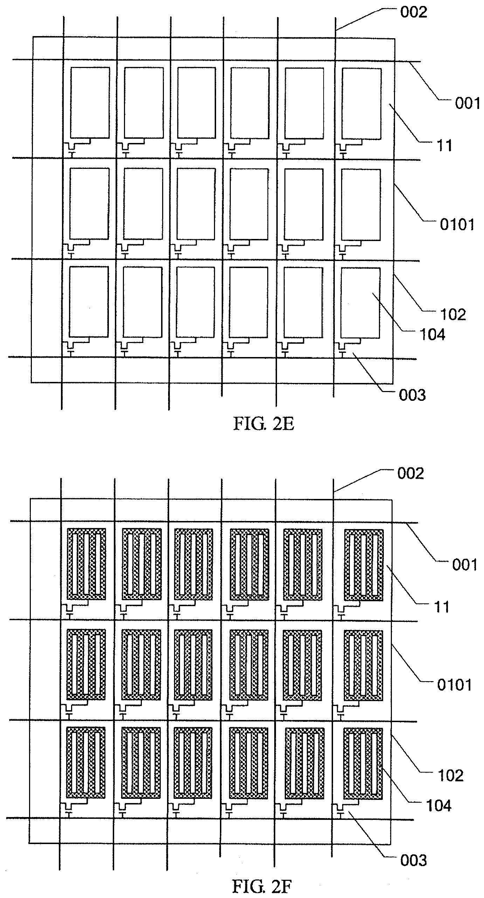

FIG. 2E is a plan view illustrating a driving unit that forms an electric field in a driving component in a device for manufacturing a slice of a 3D printed model provided by an embodiment of the present disclosure. FIG. 2E illustrates a plurality of gate lines 001, a plurality of data lines 002, and a plurality of thin film transistors (TFTs) 003. The plurality of gate lines 001 and the plurality of data lines 002 are insulated from each other and are intersected with each other to define the plurality of driving units 11. For example, as illustrated in FIG. 2E, the plurality of gate lines 001 are parallel with each other. For example, the plurality of data lines 002 are parallel with each other. For example, the gate line 001 is perpendicular to the data line 002, without limited thereto. A TFT 003 may be provided in each driving unit 11; the TFT003 includes a gate electrode, a source electrode and a drain electrode; the gate electrode is electrically connected with the gate line 001; the source electrode is electrically connected with the data line 002; and the drain electrode is electrically connected with the second electrode 104. The second electrode 104 and the first electrode 102 located below and opposite to the second electrode 104 form an electric field. For example, whether the driving units form an electric field may be controlled by controlling on-and-off of the respective TFT 003. For example, a magnitude of the electric field of the driving unit 11 may be adjusted by controlling a magnitude of a data voltage on the data line 002.

For example, an electric field in the position of the liquid 3D printing material above the driving component is changed to drive the liquid 3D printing material to flow. The liquid 3D printing material on the driving component may be changed in position under an action of an electric field between the first electrode 102 and the second electrode 104. Alternatively, the liquid 3D printing material on the driving component may be changed in position under an action of at least one selected from the group consisting of an electric field between the first electrode 102 and the second electrode 104 and an electric field generated by the second electrodes 104.

The first electrode 102 and the second electrode 104 are plate-shaped in FIG. 2E, but shapes of the first electrode 102 and the second electrode 104 are not limited to those illustrated in the diagram. For example, at least one of the first electrode 102 and the second electrode 104 is a slit electrode, which may form a multi-dimensional electric field. The liquid 3D printing material on the driving component may be changed in position under an action of the multi-dimensional electric field. For example, the multi-dimensional electric field includes an electric field of a horizontal component and an electric field of a vertical component.

For example, the liquid 3D printing material is changed in contact angle under an action of a vertical electric field or a vertical component of the electric field, which generates asymmetric deformation on the liquid 3D printing material, and generates an internal force to move, mix and split a liquid/droplet to form the pattern to be printed, without limited thereto.

FIG. 2F is a plan view illustrating a driving unit that forms an electric field in a driving component in a device for manufacturing a slice of a 3D printed model provided by an embodiment of the present disclosure. As compared with the structure illustrated in FIG. 2E, the second electrode 104 in FIG. 2F is a slit electrode.

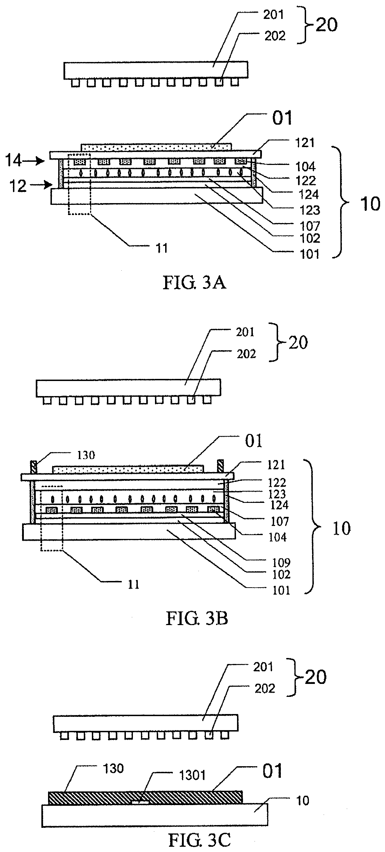

In order to use a method for manufacturing a liquid crystal display, the driving component may directly be a liquid crystal display. Hereinafter, further description is provided in connection with FIG. 3A to FIG. 3C.

FIG. 3A is a cross-sectional view illustrating a device for manufacturing a slice of a 3D printed model provided by an embodiment of the present disclosure. A driving component 10 is a liquid crystal display. As illustrated in FIG. 3A, the driving component 10 includes a base substrate 101 and an opposing substrate 121 provided opposite to the base substrate 101. A first electrode layer 12 and a first alignment layer 107 are provided at a side of the base substrate 101 that is close to the opposing substrate 121. A second electrode layer 14 and a second alignment layer 122 are provided at a side of the opposing substrate 121 that is close to the base substrate 101. A liquid crystal layer 123 is provided between the base substrate 101 and the opposing substrate 121. The base substrate 101 and the opposing substrate 121 are packaged together by a sealant 124. For example, the base substrate 101 and the opposing substrate 121 may be glass substrates, without limited thereto.

FIG. 3B is a cross-sectional view illustrating a device for manufacturing a slice of a 3D printed model provided by an embodiment of the present disclosure. As illustrated in FIG. 3B, a barrier 130 is provided at a side of the driving component 10 that is close to a curing component 20. The barrier 130 is configured to block a liquid material that does not need to be printed and flows outward from the pattern to be printed. In FIG. 3B, a first electrode 102 and a second electrode 104 are both provided on the base substrate 100, and an insulation layer 109 is provided between the first electrode 102 and the second electrode 104. Of course, the driving component illustrated in FIG. 3B may also be replaced by the driving component illustrated in FIG. 3A.

For the structures of the driving unit 11 in FIG. 3A and FIG. 3B, FIG. 2E or FIG. 2F and related description may be referred to, without repeated here.

For example, the device for manufacturing a slice of the 3D printed model provided by an embodiment of the present disclosure may include both the groove 1050 illustrated in FIG. 2B and the barrier 130 illustrated in FIG. 3B.

FIG. 3C is a schematic diagram, from another viewing angle, illustrating a device for manufacturing a slice of a 3D printed model provided by an embodiment of the present disclosure. As illustrated in FIG. 3C, a second via hole 1301 is provided at a side of the barrier 130 that is close to the driving component 10, and the second via hole 1301 is configured such that the liquid material that does not need to be printed flows out of a space surrounded by the barrier 130. For example, the barrier 130 is provided around a periphery of the driving component 10.

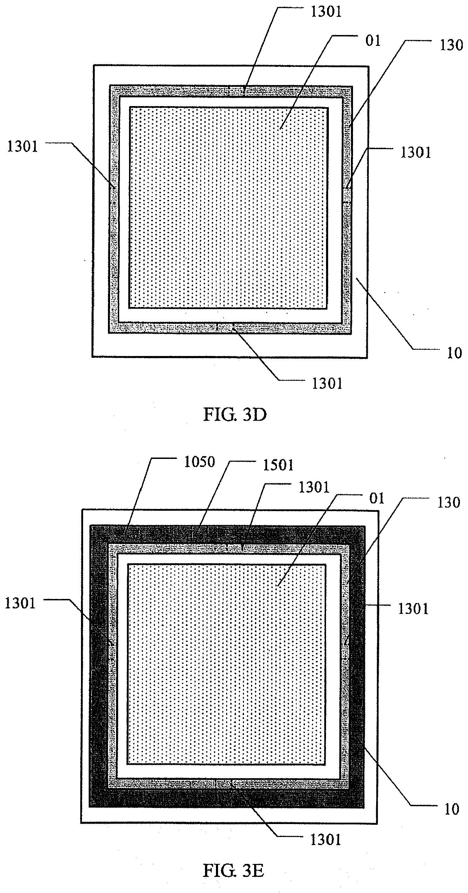

FIG. 3D is a schematic plan view illustrating a device for manufacturing a slice of a 3D printed model provided by an embodiment of the present disclosure. A plurality of second via holes 1301 are provided in the barrier 130. The driving component 10 may be a polygon, and accordingly, the barrier 130 is a polygonal ring surrounding the polygon. Each of the plurality of second via holes 1301 penetrates a side or a corner of the barrier 130. As illustrated in FIG. 3D, the barrier 130 is a rectangular ring, and each of the plurality of second via holes 1301 penetrates a side of the barrier 130.

For example, in other embodiments, the driving component is circular, and the plurality of second via holes are evenly distributed within a circular ring-shaped barrier 130.

FIG. 3E is a schematic plan view illustrating a device for manufacturing a slice of a 3D printed model provided by an embodiment of the present disclosure. For example, as illustrated in FIG. 3E, the groove 1050 is located outside the barrier 130. The material not to be printed that flows out through the second via hole 1301 of the barrier 130 enters the groove 1050, and then flows out through the first via hole 1051. That the groove 1050 is located outside the barrier 130 refers to that the groove 1050 is closer to an edge of the driving component 10 than the barrier 130. Alternatively, that the groove 1050 is located outside the barrier 130 refers to that the barrier 130 is closer to a center of the driving component 10 than the groove 1050.

For example, the driving component 10 may adopt a liquid crystal display panel as illustrated in FIG. 3A or FIG. 3B, or the driving component 10 may not be provided therein with a liquid crystal layer. For example, the driving component 10 may adopt the structure illustrated in FIG. 2A or FIG. 2B, without limited in the embodiment of the present disclosure as long as it may form an electric field that can drive the liquid 3D printing material to flow to form a pattern to be printed. In FIG. 3A, first electrodes 102 in different driving units may be insulated from each other, and a TFT is electrically connected with the first electrode, and a same electrical signal is applied to second electrodes 104 of different driving units.

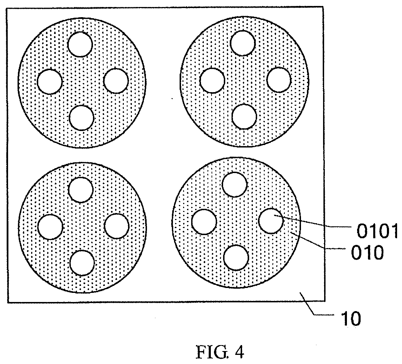

FIG. 4 is a schematic diagram illustrating simultaneously forming a plurality of patterns to be printed on a driving component of a device for manufacturing a slice of a 3D printed model provided by an embodiment of the present disclosure. For example, in some embodiments, a plurality of patterns to be printed may be simultaneously formed on the driving component, so as to facilitate large-scale production and improve efficiency of 3D printing. FIG. 4 is described with reference to the case where slices of a same pattern are formed, by way of example. Because respective driving units may be controlled independently, slices of different patterns may also be simultaneously formed, without limited in the embodiments of the present disclosure.

At least one embodiment of the present disclosure further provides a 3D printing apparatus, which includes any one of the above-described devices for manufacturing a slice of the 3D printed model.

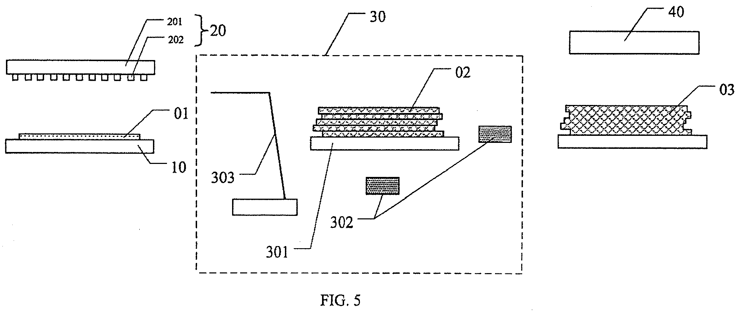

FIG. 5 is a schematic diagram illustrating a 3D printing apparatus provided by an embodiment of the present disclosure. For example, as illustrated in FIG. 5, the 3D printing apparatus further includes: a slice stacking component 30 and a slice combining component 40. The slice stacking component 30 is configured to stack a plurality of slices 02. The slice combining component 40 is configured to combine the plurality of slices 02 that are stacked into a 3D printed model 03.

For example, as illustrated in FIG. 5, the slice stacking component 30 includes a platform 301, an alignment element 302 and a robot arm 303. The platform 301 is configured to support the slice 02, the robot arm 303 is configured to move the slice 02 from a driving component 10 onto the platform 301, and the alignment element 302 is configured to align adjacent slices 02 with each other. For example, the alignment element 302 includes a camera, without limited thereto.

For example, the slice combining component 40 is configured to melt and cure the plurality of stacked slices 02 to form the 3D printed model 03. Of course, the plurality of slices 02 may also be combined into the 3D printed model 03 by other means. For example, the slices may be combined by at least one means selected from the group consisting of light irradiation and bonding. For example, the slice combining component 40 includes at least one selected from the group consisting of a light irradiating unit and an adhesive coating unit, etc. For example, the light irradiating unit is configured to provide light that is irradiated onto the plurality of slices 02 to melt the plurality of slices 02. After the plurality of slices 02 are melted, they may be cured into the 3D printed model 03 by cooling. For example, a cooling mode includes air cooling, without limited thereto.

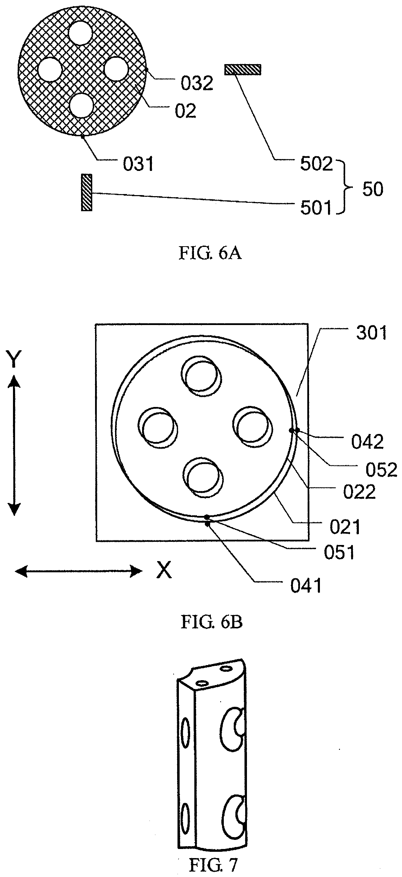

FIG. 6A is a schematic diagram illustrating an alignment mark forming element in a 3D printing apparatus provided by an embodiment of the present disclosure. As illustrated in FIG. 6A, the 3D printing apparatus further includes an alignment mark forming element 50. For example, the alignment mark forming element 50 is configured to form an alignment mark on the slice 02. For example, the alignment mark forming element 50 is configured to form at least two alignment marks in different positions on the slice 02. For example, the alignment mark forming element 50 includes two alignment mark forming elements: a first alignment mark forming element 501 and a second alignment mark forming element 502, to respectively form two alignment marks on the slice 02, i.e., a first alignment mark 031 and a second alignment mark 032. Of course, the first alignment mark 031 and the second alignment mark 032 may also be formed sequentially with a same alignment mark forming element. For example, at least two alignment marks may be formed in different positions at a side surface of the slice 02. For example, the different positions may be relative to a center of the slice 02. For example, the first alignment mark 031 and the second alignment mark 032 may be located on the side surface of slice 02. As illustrated in FIG. 6A, the first alignment mark 031 and the second alignment mark 032 may be located in a right side position and a lower side position, respectively.

For example, in an embodiment of the present disclosure, an alignment mark may be formed by laser, for example, the alignment mark may be formed by laser spraying, without limited thereto. The alignment mark may be in a cross shape, without limited thereto.

For example, in an embodiment of the present disclosure, an alignment mark forming element 50 includes a laser transmitter, and laser transmitted from the laser transmitter is irradiated on the slice 02 to form a focal point, so that a material at the focal point may be carbonized, to further form an alignment mark. The embodiment of the present disclosure is described with a case where the alignment mark forming element 50 is the laser transmitter as an example, without limited thereto, and the alignment mark may also be formed by other means. For example, in other embodiments, an alignment mark of other shape may also be formed, and the shape of the alignment mark will not be limited in the embodiments of the present disclosure. For example, after a plurality of slices are formed into an integrated element, a portion containing the alignment mark may be cut off to form a final product, without limited thereto, and the alignment mark may also be provided at a predetermined position so as to be reserved.

FIG. 6B is a schematic diagram illustrating a 3D printing apparatus that stacks adjacent slices provided by an embodiment of the present disclosure. For example, a first slice 021 is adjacent to a second slice 022. The first slice 021 is provided with a first alignment mark 041 and a second alignment mark 042. The second slice 022 is provided with a third alignment mark 051 and a fourth alignment mark 052. The first slice 021 is placed on the platform 301; and when the second slice 022 is placed, the first alignment mark 041 and the third alignment mark 051 are aligned vertically, and the second alignment mark 042 and the fourth alignment mark 052 are aligned vertically. For example, "being aligned vertically" refers to that a connection line of two alignment marks is perpendicular to an upper surface of the platform 301. Therefore, two adjacent slices may be aligned with each other in two directions perpendicular to each other in a plane parallel with the slice 02. For example, two adjacent slices are positioned in two directions perpendicular to each other in a plane parallel with the platform 301. For example, the two directions are a first direction X and a second direction Y, respectively. According to this method, two adjacent slices may be aligned sequentially, so that the plurality of slices may be positioned. For example, the slice 02 has two surfaces parallel with each other. For example, the plane parallel with the platform 301 is a plane parallel with the upper surface of the platform 301.

Of course, more than two alignment marks may also be provided on the slice. Alternatively, alignment may also be performed in other aligning mode. For example, when each slice is placed on the platform, a position of each slice on the platform may be positioned to implement slice positioning and stacking.

At least one embodiment of the present disclosure further provides a 3D printing method, which includes: providing a layer of a liquid 3D printing material on a driving component; adjusting an electric field of at least a part of a plurality of driving units in the driving component so that at least a portion of the 3D printing material flows to form a pattern to be printed; irradiating the pattern to be printed with light to cure the pattern to be printed into a slice; forming a plurality of slices by repeating the above-described steps; stacking the plurality of slices; and combining the plurality of slices that are stacked to obtain a 3D printed model.

At least one embodiment of the present disclosure further provides a 3D printing method, which includes: providing a layer of a liquid 3D printing material on a driving component; adjusting an electric field of at least a part of a plurality of driving units in the driving component so that at least a portion of the 3D printing material flows to form a pattern to be printed; light-curing the pattern to be printed to form a slice; forming a plurality of slices by repeating the above-described steps; stacking the plurality of slices; and combining the plurality of slices that are stacked to obtain a 3D printed model.

For example, the 3D printing method further includes forming at least two alignment marks at a side surface of each slice, the at least two alignment marks on each slice are configured such that two adjacent stacked slices are positioned in two directions perpendicular to each other in a same plane.

For example, the 3D printing method further includes moving each slice away from the driving component after forming the slice and before forming a next slice on the driving component.

For example, adjusting the electric field of at least a part of the plurality of driving units in the driving component so that at least a portion of the 3D printing material flows to form a pattern to be printed includes: adjusting the electric field of the driving unit corresponding to both a blank region (in a blank position) and a periphery of the pattern to be printed to cause at least a portion of the 3D printing material to flow so that an entirety of the 3D printing material forms the pattern to be printed.

For example, the electric field is formed by the driving unit corresponding to the blank position of the pattern to be printed and by the driving unit corresponding to the periphery of the pattern to be printed, and no electric field is formed corresponding to the pattern to be printed, so the position where the electric field is formed is the blank region provided with no 3D printing material, thereby forming the pattern to be printed.

For example, adjusting the electric field of at least a part of the plurality of driving units in the driving component so that at least a portion of the 3D printing material flows to form a pattern to be printed includes: adjusting the electric field of the driving unit corresponding to both a blank position and a periphery of the pattern to be printed to cause at least a portion of the 3D printing material to flow so that a portion of the 3D printing material forms the pattern to be printed.

For example, a remaining 3D printing material that does not form the pattern to be printed is separated from the pattern to be printed, so as to facilitate recycle and reuse.

In the embodiment of the present disclosure, the 3D printing apparatus and the 3D printing method may mutually refer to each other, and same or similar parts will not be repeated.

At least one embodiment of the present disclosure provides a 3D printed model, which is formed by using any one of the above-described methods.

FIG. 7 is a schematic perspective view illustrating a 3D printed model provided by an embodiment of the present disclosure. The 3D printed model may be formed by using any one of the above-described 3D printing apparatuses and any one of the above-described 3D printing methods.

It should be explained that, for the purpose of clarity only, in accompanying drawings for illustrating the embodiments) of the present disclosure, the thickness and size of a layer or a structure may be enlarged. However, it should be understood that, in the case in which a component such as a layer, film, area, substrate or the like is referred to be "on" or "under" another component, it may be directly on or under the another component or a component is interposed therebetween.

In case of no conflict, features in one embodiment or in different embodiments can be combined.

What have been described above are only specific implementations of the present disclosure, the protection scope of the present disclosure is not limited thereto. Any changes or substitutions easily occur to those skilled in the art within the technical scope of the present disclosure should be covered in the protection scope of the present disclosure. Therefore, the protection scope of the present disclosure should be based on the protection scope of the claims.

## Claims

1. A device for manufacturing a slice of a 3D printed model, comprising:
a driving component, including a plurality of driving units, each of the plurality of driving units being configured to form an electric field, the driving component being configured to drive a liquid 3D printing material located on a surface of the driving component to flow under control of the electric field to form a pattern to be printed; and
a curing component, provided opposite to the driving component, and configured to provide light that cures the pattern to be printed into a slice.

2. The device according to claim 1, wherein the driving unit comprises a first electrode and a second electrode that are insulated from each other, and the first electrode and the second electrode are configured to be applied with different voltages to form the electric field.

3. The device according to claim 2, wherein the driving component further comprises a base substrate, the first electrode and the second electrode are located on the base substrate, the driving component further comprises a protective layer covering both the first electrode and the second electrode, and the protective layer comprises a groove located at a periphery of the driving component and configured to receive a liquid material that does not need to be printed and flows out of the driving component.

4. The device according to claim 3, wherein the protective layer comprises a first via hole, the first via hole penetrates the protective layer in a direction parallel with the base substrate and is located outside the groove, and the first via hole is in communication with the groove.

5. The device according to any one of claims 1 to 4, wherein a barrier is provided at a side of the driving component that is close to the curing component, a second via hole is provided at a side of the barrier that is close to the driving component, and the second via hole is configured such that the liquid material that does not need to be printed flows out of a space surrounded by the barrier.

6. The device according to any one of claims 2 to 4, wherein the driving component further comprises a plurality of gate lines and a plurality of data lines, the plurality of gate lines and the plurality of data lines are insulated from each other and are intersect with each other to define the plurality of driving units, and the driving unit comprises a thin film transistor electrically connected with the second electrode.

7. A 3D printing apparatus, comprising the device for manufacturing a slice of the 3D printed model according to any one of claims 1 to 6.

8. The 3D printing apparatus according to claim 7, further comprising:
a slice stacking component, configured to stack a plurality of slices; and
a slice combining component, configured to combine a plurality of slices that are stacked into the 3D printed model.

9. The apparatus according to claim 8, further comprising an alignment mark forming element, wherein the alignment mark forming element is configured to form an alignment mark on the slice.

10. The apparatus according to claim 9, wherein the slice stacking component comprises a robot arm, a platform and an alignment element, the platform is configured to support the slice, the robot arm is configured to move the slice from the driving component onto the platform, and the alignment element is configured to align adjacent slices with each other.

11. The apparatus according to any one of claims 8 to 10, wherein the slice combining component comprises at least one selected from the group consisting of a light irradiating unit and an adhesive coating unit.

12. The apparatus according to claim 10, wherein the light irradiating unit is configured to provide light that is irradiated onto the plurality of slices to melt the plurality of slices.

13. A 3D printing method, comprising:
providing a layer of a liquid 3D printing material on a driving component;
adjusting an electric field of at least a part of a plurality of driving units in the driving component so that at least a portion of the 3D printing material flows to form a pattern to be printed;
light-curing the pattern to be printed to form a slice;
forming a plurality of slices by repeating the above-described steps;
stacking the plurality of slices; and
combining the plurality of slices that are stacked to obtain a 3D printed model.

14. The 3D printing method according to claim 13, further comprising forming at least two alignment marks at a side surface of the slice, wherein the at least two alignment marks are configured such that two adjacent stacked slices are aligned with each other in two directions perpendicular to each other in a plane parallel with the slice.

15. The 3D printing method according to claim 13 or 14, further comprising moving each slice away from the driving component after forming the slice and before forming a next slice on the driving component.

16. The 3D printing method according to any one of claims 13 to 15, wherein adjusting the electric field of at least a part of the plurality of driving units in the driving component so that at least a portion of the 3D printing material flows to form a pattern to be printed comprises: adjusting the electric field of the driving unit corresponding to both a blank position and a periphery of the pattern to be printed so that at least a portion of the 3D printing material flows to form the pattern to be printed by using an entirety of the 3D printing material.

17. The 3D printing method according to any one of claims 13 to 15, wherein adjusting the electric field of at least a part of the plurality of driving units in the driving component so that at least a portion of the 3D printing material flows to form a pattern to be printed comprises: adjusting the electric field of the driving unit corresponding to both a blank position and a periphery of the pattern to be printed so that at least a portion of the 3D printing material flows to form the pattern to be printed by using a part of the 3D printing material.

18. The 3D printing method according to claim 17, further comprising separating a remaining 3D printing material that does not form the pattern to be printed from the pattern to be printed.

19. A 3D printed model, formed by using the method according to any one of claims 13 to 18.
